# EUROPEAN PATENT APPLICATION

(11) **EP 4 633 231 A1**
(43) Date of publication of application: **15.10.2025**
(21) Application number: 23931813.2
(22) Date of filing: 01.12.2023
(51) Int. Cl.: H04W 24/10, H04W 24/02

(54) **INFORMATION TRANSMISSION METHOD, MEASUREMENT REPORT TRANSMISSION METHOD, MEASUREMENT REPORT CACHING METHOD, AND DEVICE AND MEDIUM**

(30) Priority: 06.04.2023 CN 202310406236
(71) Applicant: ZTE CORPORATION, Shenzhen, Guangdong 518057 (CN)
(72) Inventor: TAN, Jie, Shenzhen, Guangdong 518057 (CN); QIU, Zhihong, Shenzhen, Guangdong 518057 (CN); GAO, Yuan, Shenzhen, Guangdong 518057 (CN); SHA, Xiubin, Shenzhen, Guangdong 518057 (CN)
(74) Representative: Vossius & Partner Patentanwälte Rechtsanwälte mbB
(86) International application number: PCT/CN2023/135841
(87) International publication number: WO 2024/207767

(57) **Abstract**

Provided is an information transmission method. The information transmission method includes: receiving specified configuration information; and determining a load state of a terminal according to at least one terminal running indicator carried in the specified configuration information. A transmission method for a quality of experience measurement report, a caching method for a quality of experience measurement report, an electronic device, and a computer-readable medium are further provided.

## Description

### TECHNICAL FIELD

The present disclosure relates to the technical field of communication and, in particular, to an information transmission method, a transmission method for a quality of experience (QoE) measurement report, a caching method for a quality of experience measurement report, an electronic device, and a computer-readable medium.

### BACKGROUND

To understand user experience of an end-to-end user, an operator measures the user experience by using indicators such as throughput, data loss, and delay. Specifically, an application layer of a terminal (user equipment (UE)) may be measured so that data information such as the throughput, the data loss, and the delay mentioned above is obtained and a QoE report is generated. The preceding measurement is referred to as QoE measurement.

### SUMMARY

Embodiments of the present disclosure provide an information transmission method, a transmission method for a quality of experience measurement report, a caching method for a quality of experience measurement report, an electronic device, and a computer-readable medium.

As a first aspect of the present disclosure, an information transmission method is provided. The method includes the following.

Specified configuration information is received.

A load state of a terminal is determined according to at least one terminal running indicator carried in the specified configuration information.

As a second aspect of the present disclosure, an information transmission method is provided. The method includes the following.

Specified configuration information is generated, where the specified configuration information carries a terminal running indicator.

The specified configuration information is sent.

As a third aspect of the present disclosure, a transmission method for a quality of experience measurement report is provided. The method includes the following.

A to-be-transmitted quality of experience measurement report is divided into multiple sub-reports.

Multiple segment reports are generated according to the multiple sub-reports, where the multiple segment reports carry segment information for segmenting the quality of experience measurement report.

The multiple segment reports are transmitted to a service node.

As a fourth aspect of the present disclosure, a transmission method for a quality of experience measurement report is provided. The method includes the following.

Multiple segment reports are received.

The multiple segment reports are parsed so that segment information carried in each segment report and a sub-report carried in each segment report are obtained.

Multiple sub-reports are sorted according to the obtained segment information so that the quality of experience measurement report is obtained.

As a fifth aspect of the present disclosure, a caching method for a quality of experience measurement report is provided. The method includes the following.

In response to a cache region of an access stratum being not full, a quality of experience measurement report satisfying a storage requirement is stored in the cache region.

In response to the cache region of the access stratum being full, a quality of experience measurement report stored in the cache region is overwritten with a to-be-stored quality of experience measurement report according to a preset rule.

As a sixth aspect of the present disclosure, an electronic device is provided.

The electronic device includes one or more processors and a memory.

The memory has one or more programs stored thereon, and when the one or more programs are executed by the one or more processors, the one or more processors are caused to perform the method in any aspect of the present disclosure.

As a seventh aspect of the present disclosure, a computer-readable medium is provided. The computer-readable storage medium has a computer program stored thereon, and when the computer program is executed by a processor, the method in any aspect of the present disclosure is performed.

According to the information transmission method provided in the present disclosure, the terminal running indicator of the terminal is carried in the specified configuration information, and the load state of the terminal is determined through the terminal running indicator. According to the load state of the terminal, it may be determined whether QoE measurement needs to be performed.

According to the transmission method for the quality of experience measurement report provided in the present disclosure, the to-be-transmitted quality of experience measurement report is first divided into the multiple sub-reports. For the transmission of the multiple sub-reports, the sub-reports may be encapsulated through the segment information, thereby obtaining the multiple segment reports. After the segment reports are sent to the service node, the service node may parse the received multiple segment reports to obtain the multiple sub-reports. The multiple sub-reports are concatenated so that the complete quality of experience measurement report can be obtained.

The caching method provided in the present disclosure is performed by the terminal. In response to the cache region of the access stratum being not full, the quality of experience measurement report satisfying the storage requirement may be stored in the cache region. In response to the cache region of the access stratum being full, the quality of experience measurement report stored in the cache region is overwritten with the to-be-stored quality of experience measurement report.

### BRIEF DESCRIPTION OF DRAWINGS

FIG. 1 is a flowchart of an embodiment of an information transmission method provided in the first aspect of the present disclosure;
FIG. 2 is a schematic diagram showing that an operations, administration, and maintenance device sends a base station operations, administration, and maintenance configuration information carrying a terminal running indicator;
FIG. 3 is a schematic diagram showing that an access and mobility management function entity sends a base station quality of experience measurement collection configuration information carrying a terminal running indicator;
FIG. 4 is a schematic diagram showing that a source base station sends a handover request message to a target base station during a handover between base stations based on an Xn interface;
FIG. 5 is a schematic diagram showing that an access and mobility management function entity sends a handover request message to a target base station during a handover between base stations based on an NG interface;
FIG. 6 is a flowchart of an embodiment of an information transmission method provided in the second aspect of the present disclosure;
FIG. 7 is a flowchart of an embodiment of a transmission method for a quality of experience measurement report provided in the third aspect of the present disclosure;
FIG. 8 is a flowchart of an embodiment of a transmission method for a quality of experience measurement report provided in the fourth aspect of the present disclosure;
FIG. 9 is a flowchart of an embodiment of a caching method for a quality of experience measurement report provided in the fifth aspect of the present disclosure;
FIG. 10 is a schematic diagram of modules of an electronic device according to the present disclosure; and
FIG. 11 is a schematic diagram of a module of a computer-readable medium according to the present disclosure.

### DETAILED DESCRIPTION

To allow those skilled in the art to better understand the technical solutions of the present disclosure, an information transmission method, a transmission method for a quality of experience measurement report, a caching method for a quality of experience measurement report, an electronic device, and a computer-readable medium provided in the present disclosure are described below in detail in conjunction with the drawings.

Example embodiments are described more completely below with reference to the drawings, but the example embodiments may be embodied in different forms and are not to be construed as limited to the embodiments set forth herein. Rather, these embodiments are provided to make the present disclosure thorough and complete and make those skilled in the art fully understand the scope of the present disclosure.

If not in collision, the embodiments of the present disclosure and features therein may be combined with each other.

As used herein, the term "and/or" includes any and all combinations of at least one of the associated listed items.

Terms used herein are used for describing particular embodiments and are not intended to limit the present disclosure. As used herein, singular forms "a" and "the" are intended to include plural forms as well, unless otherwise clearly specified in the context. It is to be further understood that the terms "include" and/or "made of" used in the specification specify the existence of the feature, entity, step, operation, element, and/or component, without excluding the existence or addition of one or more other features, entities, steps, operations, elements, components, and/or combinations thereof.

Unless otherwise defined, all the terms (including technical and scientific terms) used herein have the same meanings as commonly understood by those of ordinary skill in the art. It is to be further understood that terms, such as those defined in commonly used dictionaries, are to be interpreted as having meanings consistent with their meanings in the context of the related art and the present disclosure and are not to be interpreted in an idealized or overly formal sense unless expressly so defined herein.

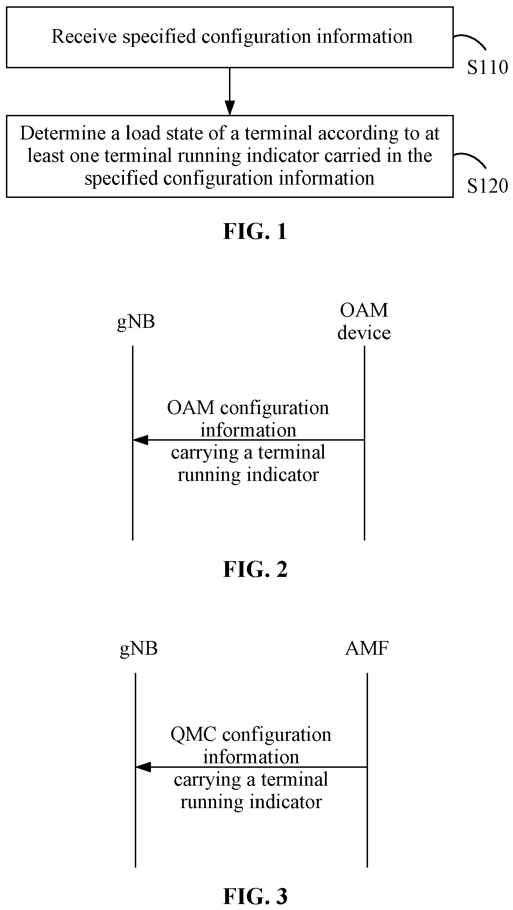

When a terminal is in an overload state, QoE measurement is continued, which may affect the normal running of the terminal. In view of this, as the first aspect of the present disclosure, an information transmission method is provided. As shown in FIG. 1, the method includes the following.

In S110, specified configuration information is received.

In S120, a load state of a terminal is determined according to at least one terminal running indicator carried in the specified configuration information.

As described above, the terminal running indicator of the terminal is carried in the specified configuration information, and the load state of the terminal is determined through the terminal running indicator. According to the load state of the terminal, it may be determined whether the QoE measurement needs to be performed.

In an optional embodiment, if the load state of the terminal indicates that the terminal is overloaded, the QoE measurement may no longer be performed.

In the present disclosure, the preceding S110 and S120 may be performed by a base station. After the base station determines, according to the load state, that it is inappropriate to perform the QoE measurement on the terminal, the base station may send indication information for stopping the QoE measurement. Of course, the present disclosure is not limited thereto. The preceding S110 and S120 may be performed by another electronic device. After obtaining the load state of the terminal, the electronic device sends information about the load state of the terminal to a corresponding base station, and the base station determines whether to send the indication information for stopping the QoE measurement.

In the present disclosure, the terminal running indicator is not particularly limited as long as the terminal running indicator can reflect the load state of the terminal. In an optional embodiment, the terminal running indicator is selected from at least one of the following indicators: usage information of a resource allocated to the terminal, power of the terminal, central processing unit (CPU) usage of the terminal, or a wireless load of a cell in which the terminal is located.

In an optional embodiment, the resource allocated to the terminal may be a bandwidth resource or a physical resource block (PRB).

It is to be noted that the wireless load of the cell in which the terminal is located refers to the number of users in the cell in which the terminal is located.

When the terminal running indicator exceeds a corresponding threshold, the load state of the terminal is determined as an overload state.

In the present disclosure, how to acquire the specified configuration information is not particularly limited. How to acquire the specified configuration information may be determined according to a specific type of the QoE measurement and a specific type of radio access network (RAN) visible quality of experience (RVQoE) measurement.

In an implementation, QoE measurement and RVQoE measurement based on a container may include management-based QoE and signaling-based QoE.

In this embodiment of the management-based QoE, the terminal is configured through an operations, administration, and maintenance (OAM) device so that the QoE measurement is implemented. Accordingly, the specified configuration information may include operations, administration, and maintenance configuration information, and the operations, administration, and maintenance configuration information is from the operations, administration, and maintenance device.

In an optional embodiment, as shown in FIG. 2, the OAM device sends OAM configuration information carrying a terminal running indicator to a base station (a next generation Node B (gNB)). In this embodiment, the base station selects, through OAM configuration, a UE that satisfies a condition to perform the QoE measurement.

In this embodiment of the signaling-based QoE, the terminal is configured through an access and mobility management function (AMF) entity so that the QoE measurement is implemented. Accordingly, the specified information includes QoE measurement collection (QMC) configuration information, and the quality of experience measurement collection configuration information is from the AMF entity.

In an optional embodiment, as shown in FIG. 3, the AMF entity sends the QMC configuration information carrying the terminal running indicator to the gNB. In this embodiment, the base station performs configuration on a specific UE through the AMF. Of course, for the RVQoE, the base station performs the configuration on the specific UE directly.

In another optional embodiment, the specified configuration information may be acquired during a base station handover. That is to say, the specified configuration information includes a handover request message.

In an optional embodiment, the handover request message may be transmitted via an Xn interface. Accordingly, the current electronic device performing the information transmission method may be a target base station. Accordingly, reception of the specified configuration information is specifically performed as follows.

The handover request message from a source base station is received via the Xn interface.

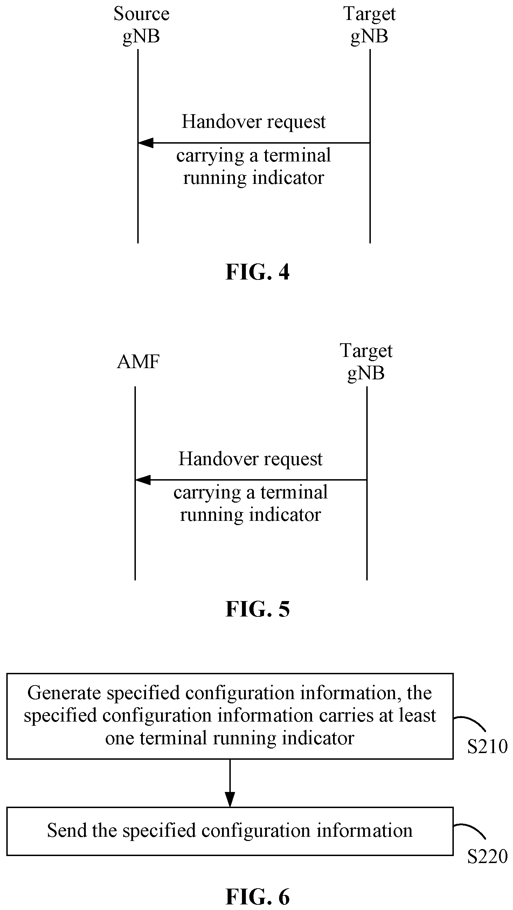

As shown in FIG. 4, during a handover between gNBs based on the Xn interface, a source gNB sends a handover request message to a target gNB. A source to target transparent container cell carries the terminal running indicator.

In addition, the handover request message may also be transmitted via an NG interface. Accordingly, the current electronic device performing the information transmission method may be the target base station. Accordingly, the reception of the specified configuration information is specifically performed as follows.

The handover request message from the access and mobility management function entity is received via the NG interface.

As shown in FIG. 5, during a handover between gNBs based on the NG interface, the AMF entity sends a handover request message to a target gNB. A source to target transparent container cell carries the terminal running indicator.

As described above, determining the load state of the terminal according to the terminal running indicator carried in the specified configuration information includes the following.

In a case where the at least one terminal running indicator exceeds a corresponding set threshold, the load state of the terminal is determined as the overload state.

As an optional embodiment, in the case where all terminal running indicators do not exceed the corresponding set thresholds, the load state of the terminal is determined as a non-overload state.

Of course, the load state of the terminal is not limited to "the overload state" and "the non-overload state" in the two embodiments.

As described above, the information transmission method further includes the following.

In the case where the load state of the terminal is determined as the overload state, the indication information for stopping the quality of experience measurement is sent.

As the second aspect of the present disclosure, an information transmission method is provided. As shown in FIG. 6, the information transmission method may include the following.

In S210, specified configuration information is generated, and the specified configuration information carries at least one terminal running indicator.

In S220, the specified configuration information is sent.

The specified configuration information generated in S210 is sent to the electronic device (for example, the base station) that performs the information transmission method provided in the first aspect of the present disclosure. The specified configuration information is generated through the terminal running indicator and sent to the electronic device that performs the information transmission method provided in the first aspect of the present disclosure. According to the specified configuration information, the electronic device may determine whether the terminal is overloaded and further determine whether to send the terminal indication information for stopping the QoE measurement to the terminal.

In this embodiment of the management-based QoE, the terminal is configured through an operations, administration, and maintenance device to implement the QoE measurement. That is to say, the specified configuration information is operations, administration, and maintenance configuration information. Accordingly, the current device is the operations, administration, and maintenance device. In this embodiment, according to the embodiment shown in FIG. 2, the current device may send the operations, administration, and maintenance configuration information (that is, the specified configuration information) carrying the terminal running indicator to the base station.

In this embodiment of the signaling-based QoE, the terminal is configured through an access and mobility management function entity to implement the QoE measurement. Accordingly, the specified information is quality of experience measurement collection configuration information, and the current device is the access and mobility management function entity. In this embodiment, according to the embodiment shown in FIG. 3, the current device may send the quality of experience measurement collection configuration information (that is, the specified configuration information) carrying the terminal running indicator to the base station.

As an optional embodiment, the specified configuration information includes a handover request message. In other words, the terminal running indicator is carried through the handover request message.

In an embodiment, the handover request message is transmitted via the Xn interface, and a base station handover is performed between a source base station and a target base station. The current device that performs the information transmission method provided in the second aspect of the present disclosure is the source base station. Accordingly, sending the specified configuration information is specifically performed as follows.

The handover request message is sent via the Xn interface.

In an embodiment, the handover request message is sent via an NG interface, and the AMF entity sends the handover request message to the target base station. The current device that performs the information transmission method provided in the second aspect of the present disclosure is the AMF entity. Accordingly, sending the specified configuration information is specifically performed as follows.

The handover request message is sent via the NG interface.

As described above, in the preceding two embodiments, a source to target transparent container cell may carry the terminal running indicator.

As described above, the terminal running indicator is selected from at least one of the following: usage information of a resource allocated to a terminal, power of a terminal, CPU usage of a terminal, or a wireless load of a cell in which a terminal is located.

As an optional embodiment, the resource allocated to the terminal may be a bandwidth resource or a PRB.

It is to be noted that the wireless load of the cell in which the terminal is located refers to the number of users in the cell in which the terminal is located.

In a dual connectivity scenario, both a main node (MN) and a service node (SN) receive a quality of experience report. As an optional embodiment, the quality of experience report may be transmitted to the MN through signaling radio bearer (SRB4) signaling.

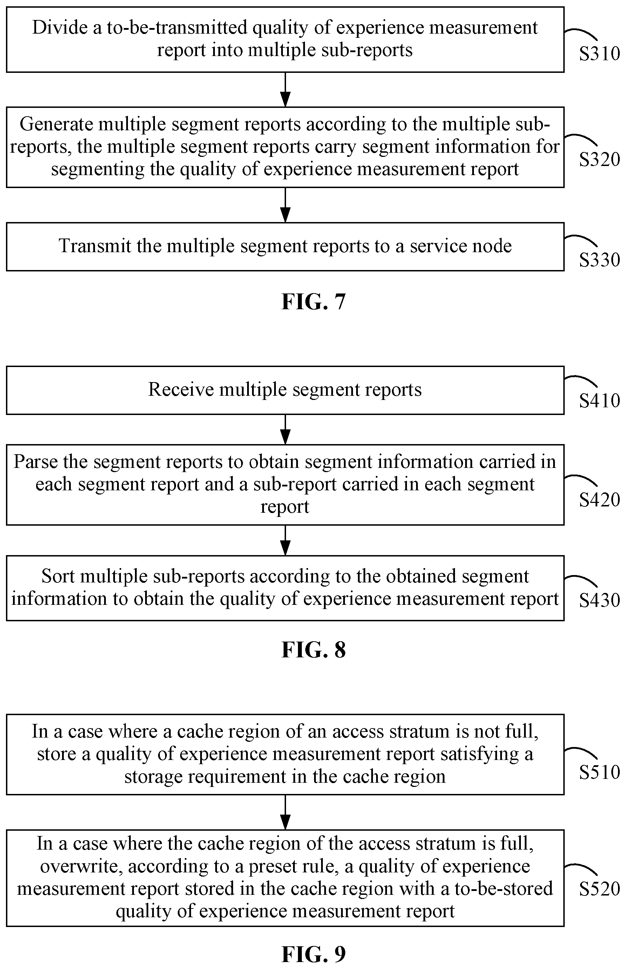

As the third aspect of the present disclosure, a transmission method for a quality of experience measurement report is provided. As shown in FIG. 7, the transmission method may include the following.

In S310, a to-be-transmitted quality of experience measurement report is divided into multiple sub-reports.

In S320, multiple segment reports are generated according to the multiple sub-reports, where the multiple segment reports carry segment information for segmenting the quality of experience measurement report.

In S330, the multiple segment reports are transmitted to a service node.

When information is transmitted to the service node, transmission bytes are limited. According to the transmission method provided in the present disclosure, the to-be-transmitted quality of experience report is first divided into the multiple sub-reports. To transmit the multiple sub-reports, the sub-reports may be encapsulated by using the segment information to obtain the multiple segment reports. After the segment reports are sent to the service node, the service node may parse the received multiple segment reports to obtain the multiple sub-reports. The multiple sub-reports are concatenated so that the complete quality of experience measurement report may be obtained.

The transmission method provided in the third aspect of the present disclosure may be performed by a terminal. Optionally, the segment information may be carried through uplink (UL) dedicated message segment information (ULDedicatedMessageSegment message).

In the present disclosure, the specific content of the segment information is not particularly limited. Optionally, the segment information may include at least one of the following information: the sequence number (segmentNumber) of a segment, container information (rrc-MessageSegmentContainer), or segment type information (rrc-MessageSegmentType). The segment type information is used for indicating whether the current segment is the last segment.

The sequence number of the segment represents the sequence number of a segment in an upper link (UL) dedicated control channel (DCCH) message for encoding identification.

The container information indicates that the size of a segment contained in a container should be small enough so that an obtained encoded radio resource control (RRC) message protocol data unit (PDU) is less than or equal to a size limitation of a packet data convergence (PDCP) protocol service data unit (SDU).

As an optional embodiment, in transmitting the multiple segment reports, the segment reports are transmitted through a signaling radio bearer (SRB5). The SRB5 is configured and obtained by defining an SRB list in a radio bearer configuration (RadioBearerConfig), and the SRB5 has an SRB identity indicating the radio bearer type of the SRB5. That is to say, the SRB identity is defined such that the SRB5 may be distinguished from other signaling radio bearers (for example, SRB0, SRB1, SRB2, SRB3, and SRB4).

As the fourth aspect of the present disclosure, a transmission method for a quality of experience measurement report is provided. As shown in FIG. 8, the transmission method includes the following.

In S410, multiple segment reports are received.

In S420, the multiple segment reports are parsed so that segment information carried in each segment report and a sub-report carried in each segment report are obtained.

In S430, multiple sub-reports are sorted according to the obtained segment information so that the quality of experience measurement report is obtained.

The transmission method provided in the fourth aspect of the present disclosure may be performed by a service node. As described above, the segment reports are sent by a terminal. The multiple sub-reports are sorted according to the segment information so that the quality of experience measurement report may be obtained.

As described above, the terminal may use uplink dedicated message segment information to carry the segment information. Accordingly, in parsing the segment reports, the segment information is obtained from the uplink dedicated message segment information.

As described above, the segment information may include at least one of the following information: the sequence number of a segment, container information, or segment type information. The segment type information is used for indicating whether the current segment is the last segment.

Optionally, receiving the multiple segment reports includes receiving the segment reports transmitted in the form of the SRB5.

For a terminal on which the quality of experience measurement is performed, when the terminal is in an idle state and an inactive state, the quality of experience measurement report needs to be stored in a cache region of an access stratum (AS) of the terminal. As the fifth aspect of the present disclosure, a caching method for a quality of experience measurement report is provided. As shown in FIG. 9, the caching method includes the following.

In S510, in a case where the cache region of the access stratum is not full, a quality of experience measurement report satisfying a storage requirement is stored in the cache region.

In S520, in a case where the cache region of the access stratum is full, a quality of experience measurement report stored in the cache region is overwritten with a to-be-stored quality of experience measurement report according to a preset rule.

The caching method provided in the present disclosure is performed by the terminal. In the case where the cache region of the access stratum is not full, the quality of experience measurement report satisfying the storage requirement may be stored in the cache region. In the case where the cache region of the access stratum is full, the quality of experience measurement report stored in the cache region is overwritten with the to-be-stored quality of experience measurement report.

In the present disclosure, the size of the cache region may be selected from any one of the following: 128 KB, 256 KB, 512 KB, or 1024 KB.

As an optional embodiment, a parameter in the quality of experience measurement report satisfying the storage requirement satisfies at least one of the following conditions.

A quality of experience value is less than a preset quality of experience value.

A delay value is greater than a preset delay value.

The number of lags is greater than a preset number of lags.

A bit rate fluctuation value is greater than a preset bit rate fluctuation value.

A quality of experience subjective indicator value is less than a preset quality of experience subjective indicator value.

A packet loss rate is higher than a preset packet loss rate.

A service priority is higher than a preset priority value.

The quality of experience measurement report satisfying the preceding condition may reflect that user experience of the user is unsatisfying. This type of quality of experience measurement report is more valuable and more worthy of research.

In the present disclosure, how to specifically perform S520 is not particularly limited. Optionally, overwriting the quality of experience measurement report stored in the cache region with the to-be-stored quality of experience measurement report according to the preset rule includes the following.

Quality of experience measurement reports stored in the cache region are sequentially overwritten with to-be-stored quality of experience measurement reports in descending order of priorities.

Alternatively, quality of experience measurement reports stored in the cache region are sequentially overwritten with to-be-stored quality of experience measurement reports in chronological order.

The present disclosure further provides a method for acquiring clock information. The method is applied to a base station and includes the following.

Identification information of an event related to a reference clock is sent through broadcasting and/or unicasting. The identification information is at least included in one of the following: a broadcast system information block 9 (SIB9), downlink information transfer (DLInformationTransfer), or reference clock information (ReferenceTimeInfo).

In the present disclosure, the identification information of the event is not particularly limited as long as the event can be uniquely identified. In an optional embodiment, the identification information may be an event identity (ID).

In the case where a terminal is in an idle state and/or an inactive state, after the identification information of the event related to the reference clock is received, the terminal may be triggered to enter a connected state to obtain clock information.

After receiving the identification information, the terminal compares the identification information with locally stored identification information of time corresponding to a reference clock. In the case where the two pieces of identification information are inconsistent, the terminal actively initiates RRC establishment or RRC reestablishment.

As an optional embodiment, to allow a base station to recognize that the purpose of the terminal entering the connected state is to acquire the clock, the terminal actively initiates the RRC establishment, and a clock change indication and/or a clock acquisition request is carried in an establishment cause (EstablishmentCause) in RRC establishment request (RRCSetupRequest) information. Accordingly, the method may further include the following.

The establishment cause in the RRC establishment request is parsed in response to the RRC establishment request.

In the case where the clock change indication and/or the clock acquisition request is obtained through parsing, the clock information is sent to the terminal that sends the RRC establishment request.

As another optional embodiment, the terminal actively initiates the RRC reestablishment, the clock change indication and/or the clock acquisition request is carried in a resume cause (ResumeCause) in RRC reestablishment request (RRCResumeRequest) information. Accordingly, the method may further include the following.

The resume cause in the RRC reestablishment request is parsed in response to the RRC reestablishment request.

In the case where the clock change indication and/or the clock acquisition request is obtained through parsing, the clock information is sent to the terminal that sends the RRC reestablishment request.

In addition, the terminal may carry the clock change indication and/or the clock acquisition request in message 5 (Msg5) in a random access procedure. Accordingly, the method may further include the following.

The message 5 is parsed in response to the message 5.

In the case where the clock change indication and/or the clock acquisition request is obtained through parsing, the clock information is sent to the terminal that sends the message 5.

The present disclosure further provides a method for acquiring clock information. The method is applied to a terminal and includes the following.

Identification information of an event related to a reference clock sent by a base station is received.

The received identification information is compared with locally stored identification information of time corresponding to a reference clock.

In the case where the two are inconsistent, a clock change indication and/or a clock acquisition request is sent to the base station.

As described above, the terminal actively initiates RRC establishment, the clock change indication and/or the clock acquisition request is carried in an establishment cause (EstablishmentCause) in RRC establishment request (RRCSetupRequest) information.

As another optional embodiment, the clock change indication and/or the clock acquisition request may be carried in message 5 in a random access procedure.

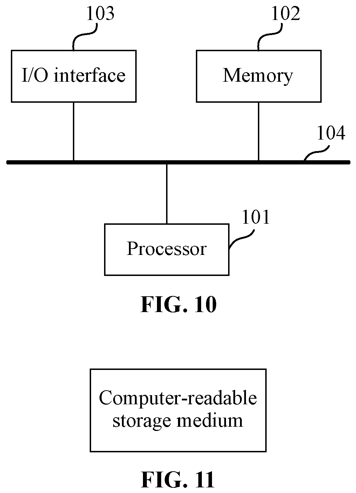

As the sixth aspect of the present disclosure, an electronic device is provided. As shown in FIG. 10, the electronic device includes one or more processors 101 and a memory 102.

The memory 102 has one or more programs stored thereon, when the one or more programs are executed by the one or more processors 101, the one or more processors 101 are caused to perform the method in any aspect of the present disclosure.

Optionally, the electronic device may further include one or more input/output (I/O) interfaces 103. The one or more I/O interfaces 103 are connected between the processor and the memory and configured to implement information interaction between the processor and the memory.

The processor 101 is a device having the capability of processing data and includes, but is not limited to, a central processing unit (CPU), and the like. The memory 102 is a device having the capability of storing data and includes, but is not limited to, a random-access memory (RAM, in particular, a synchronous dynamic RAM (SDRAM), a double data rate (DDR) memory, and the like), a read-only memory (ROM), an electrically erasable programmable read-only memory (EEPROM), and a flash memory (FLASH). The I/O interface (read/write interface) 103 is connected between the processor 101 and the memory 102, is configured to implement information interaction between the processor 101 and the memory 102, and includes, but is not limited to, a bus and the like.

In some embodiments, the processor 101, the memory 102, and the I/O interface 103 are connected to each other via a bus 104 and further connected to other components of a computing device.

As the seventh aspect of the present disclosure, as shown in FIG. 11, a computer-readable medium is provided. The computer-readable storage medium has a computer program stored thereon, and when the computer program is executed by a processor, the method in any aspect of the present disclosure is performed.

It is to be understood by those of ordinary skill in the art that some or all steps of the preceding method and function modules/units in the preceding system or apparatus may be implemented as software, firmware, hardware, and appropriate combinations thereof. In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those of ordinary skill in the art, the term "computer storage media" includes volatile and nonvolatile media and removable and non-removable media implemented in any method or technology for storing information (such as computer-readable instructions, data structures, program modules, or other data). The computer storage media include, but are not limited to, a RAM, a ROM, an EEPROM, a flash memory or other memory technologies, a CD-ROM, a digital versatile disc (DVD) or other optical discs, a magnetic cassette, a magnetic tape, a magnetic disk or other magnetic storage apparatuses, or any other medium that can be used for storing desired information and can be accessed by a computer. In addition, as is known to those of ordinary skill in the art, the communication media generally include computer-readable instructions, data structures, program modules, or other data in modulated data signals such as carriers or other transmission mechanisms, and may include any information delivery medium.

The example embodiments have been disclosed herein. Although specific terms are used, these terms are used only and should be construed only in a generic and illustrative sense and are not for purposes of a limitation. In some instances, it is apparent to those skilled in the art that features, characteristics, and/or elements described in conjunction with particular embodiments may be used alone or may be used in combination with features, characteristics, and/or elements described in conjunction with other embodiments, unless otherwise clearly indicated. Accordingly, it is to be understood by those skilled in the art that various changes in form and detail may be made without departing from the scope of the present disclosure as set forth in the appended claims.

## Claims

1. An information transmission method, comprising:
receiving specified configuration information; and
determining a load state of a terminal according to at least one terminal running indicator carried in the specified configuration information.

2. The information transmission method according to claim 1, wherein the specified configuration information comprises operations, administration, and maintenance configuration information; or the specified configuration information comprises quality of experience measurement collection configuration information.

3. The information transmission method according to claim 1, wherein the specified configuration information comprises a handover request message, and receiving the specified configuration information comprises:
receiving the handover request message from a source base station via an Xn interface; or
receiving the handover request message from an access and mobility management function entity via an NG interface.

4. The information transmission method according to any one of claims 1 to 3, wherein determining the load state of the terminal according to the at least one terminal running indicator carried in the specified configuration information comprises:
in response to a terminal running indicator of the at least one terminal running indicator exceeding a corresponding set threshold, determining the load state of the terminal as an overload state;
wherein the at least one terminal running indicator is selected from at least one of the following information: usage information of a resource allocated to the terminal, power of the terminal, central processing unit (CPU) usage of the terminal, or a wireless load of a cell in which the terminal is located.

5. The information transmission method according to any one of claims 1 to 3, further comprising:
in response to the load state of the terminal being determined as an overload state, sending indication information for stopping quality of experience measurement.

6. An information transmission method, comprising:
generating specified configuration information, wherein the specified configuration information carries at least one terminal running indicator; and
sending the specified configuration information.

7. The information transmission method according to claim 6, wherein the specified configuration information is operations, administration, and maintenance configuration information; or the specified configuration information is quality of experience measurement collection configuration information.

8. The information transmission method according to claim 6, wherein the specified configuration information comprises a handover request message, and sending the specified configuration information comprises:
sending the handover request message via an Xn interface; or
sending the handover request message via an NG interface.

9. The information transmission method according to any one of claims 6 to 8, wherein the at least one terminal running indicator is selected from at least one of the following information:
usage information of a resource allocated to a terminal, power of a terminal, central processing unit (CPU) usage of a terminal, or a wireless load of a cell in which a terminal is located.

10. A transmission method for a quality of experience measurement report, comprising:
dividing a to-be-transmitted quality of experience measurement report into a plurality of sub-reports;
generating a plurality of segment reports according to the plurality of sub-reports, wherein the plurality of segment reports carry segment information for segmenting the quality of experience measurement report; and
transmitting the plurality of segment reports to a service node.

11. The transmission method according to claim 10, wherein the segment information is carried through uplink dedicated message segment information, and the segment information comprises at least one of the following information:
a sequence number of a segment, container information, or segment type information, wherein the segment type information is used for indicating whether a current segment is a last segment.

12. The transmission method according to claim 10 or 11, wherein in transmitting the plurality of segment reports, the plurality of segment reports are transmitted through a signaling radio bearer 5 (SRB5).

13. A transmission method for a quality of experience measurement report, comprising:
receiving a plurality of segment reports;
parsing the plurality of segment reports to obtain segment information carried in each of the plurality of segment reports and a sub-report carried in each of the plurality of segment reports; and
sorting, according to the obtained segment information, a plurality of sub-reports to obtain the quality of experience measurement report.

14. The transmission method according to claim 13, wherein in parsing the plurality of segment reports, the segment information is obtained from uplink dedicated message segment information, and the segment information comprises at least one of the following information:
a sequence number of a segment, container information, or segment type information, wherein the segment type information is used for indicating whether a current segment is a last segment.

15. The transmission method according to claim 13 or 14, wherein in receiving the plurality of segment reports, the plurality of segment reports transmitted through a signaling radio bearer 5 (SRB5) are received, wherein the SRB5 is configured and obtained by defining a signaling radio bearer (SRB) list in a radio bearer configuration, and the SRB5 has an SRB identity indicating a radio bearer type of the SRB5.

16. A caching method for a quality of experience measurement report, comprising:
in response to a cache region of an access stratum being not full, storing a quality of experience measurement report satisfying a storage requirement in the cache region; and
in response to the cache region of the access stratum being full, overwriting, according to a preset rule, a quality of experience measurement report stored in the cache region with a to-be-stored quality of experience measurement report.

17. The caching method according to claim 16, wherein a parameter in the quality of experience measurement report satisfying the storage requirement satisfies at least one of the following conditions:
a quality of experience value being less than a preset quality of experience value;
a delay value being greater than a preset delay value;
a number of lags being greater than a preset number of lags;
a bit rate fluctuation value being greater than a preset bit rate fluctuation value;
a quality of experience subjective indicator value being less than a preset quality of experience subjective indicator value;
a packet loss rate being higher than a preset packet loss rate; or
a service priority being higher than a preset priority value.

18. The caching method according to claim 16 or 17, wherein overwriting, according to the preset rule, the quality of experience measurement report stored in the cache region with the to-be-stored quality of experience measurement report comprises:
sequentially overwriting quality of experience measurement reports stored in the cache region with to-be-stored quality of experience measurement reports in descending order of priorities; or
sequentially overwriting quality of experience measurement reports stored in the cache region with to-be-stored quality of experience measurement reports in chronological order.

19. An electronic device, comprising:
at least one processor; and
a memory having at least one program stored thereon, wherein the at least one program, when executed by the at least one processor, causes the at least one processor to perform the method according to any one of claims 1 to 18.

20. A computer-readable medium having a computer program stored thereon, wherein when the computer program is executed by a processor, the method according to any one of claims 1 to 18 is performed.
